Europäisches Patentamt

European Patent Office

Office européen des brevets

(19)

(11) EP 0 834 787 B1

(12) FASCICULE DE BREVET EUROPEEN

(45) Date de publication et mention
de la délivrance du brevet:
**07.11.2001 Bulletin 2001/45**

(51) Int Cl.⁷: **G05D 1/06**

(21) Numéro de dépôt: **97402160.2**

(22) Date de dépôt: **18.09.1997**

(54) **Procédé et dispositif de guidage vertical d'un aéronef**

Methode und Vorrichtung zur vertikalen Führung eines Flugzeugs

Method and device for vertical guidance of an aircraft

(84) Etats contractants désignés:
**DE GB**

(30) Priorité: **03.10.1996 FR 9612049**

(43) Date de publication de la demande:
**08.04.1998 Bulletin 1998/15**

(73) Titulaire: **AEROSPATIALE MATRA**
**75016 Paris (FR)**

(72) Inventeurs:
• **Saint Upery, Yves**
**31300 Toulouse (FR)**

• **Peyrucain, Eric**
**31180 Saint Genies Bellevue (FR)**

(74) Mandataire: **Bonnetat, Christian**
**CABINET BONNETAT**
**29, rue de St. Pétersbourg**
**75008 Paris (FR)**

(56) Documents cités:
**EP-A- 0 034 874          FR-A- 2 371 006**
**GB-A- 2 240 957**

## Description

La présente invention concerne un procédé de guidage d'un aéronef dans un plan vertical le long d'une trajectoire prédéfinie, ainsi qu'un dispositif pour la mise en oeuvre dudit procédé.

Dans le cadre de la présente invention, ladite trajectoire prédéfinie qui est déterminée dans ledit plan vertical est formée de segments rectilignes successifs.

Le guidage d'un aéronef, en particulier un avion de transport, le long d'une telle trajectoire verticale suppose, si l'aéronef ne se trouve pas sur ladite trajectoire au début du guidage, la mise en oeuvre d'une opération de conduite destinée à amener ledit aéronef sur ladite trajectoire. Une telle opération de conduite est désignée dans le cadre de la présente invention "capture de la trajectoire", tandis que l'on appelle "suivi" le guidage proprement dit de l'aéronef le long d'une trajectoire prédéfinie (préalablement capturée si nécessaire).

On sait qu'une telle trajectoire verticale peut être déterminée sur de nombreux types d'aéronefs par le calculateur de gestion de vol, notamment lors des phases de descente et d'approche d'une zone d'atterrissage.

Toutefois, les méthodes de guidage connues utilisées actuellement ne sont pas précises. De plus, le guidage est généralement effectué avec une accélération verticale élevée et des variations d'assiette et de régime du moteur en dents de scie, ce qui entraîne de l'inconfort, en particulier pour les passagers, ainsi que la génération de contraintes structurales importantes sur ledit aéronef et une usure prématurée des moteurs.

Par le document FR-A-2 371 006, on connaît un procédé de pilotage d'un aérodyne, consistant essentiellement à déterminer, principalement dans la phase finale de l'approche, à partir du moment où l'aéronef atteint l'axe glide, un parcours adéquat, en deux tronçons, dans le plan des variables vitesse et altitude pour atteindre un point situé à une altitude donnée, à une vitesse donnée.

La présente invention a pour objet de remédier à ces inconvénients. Elle concerne un procédé de guidage d'un aéronef dans un plan vertical permettant de capturer et de suivre, de façon simple, précise et peu brusque, une trajectoire prescrite définie dans ledit plan vertical et formée de segments rectilignes adjacents.

A cet effet, selon l'invention, ledit procédé de guidage d'un aéronef dans un plan vertical pour capturer et suivre une trajectoire prescrite définie dans ledit plan vertical et formée de segments rectilignes successifs est remarquable en ce que l'on effectue de façon répétitive les opérations suivantes :

- on détermine le segment rectiligne de ladite trajectoire par rapport auquel ledit aéronef doit être guidé ;
- on détermine la distance verticale he entre ledit aéronef et le segment de guidage ainsi déterminé ;
- on détermine la différence de vitesse ve entre la vitesse verticale effective de l'aéronef et la vitesse verticale qu'il aurait s'il se déplaçait le long dudit segment de guidage, pour une même vitesse parallèlement au sol ;
- on calcule une variation d'accélération verticale $\Delta nz$ à partir de la relation :

$$\Delta nz = ((k1.(he-hc)) + (ve-vc)).k2$$

dans laquelle :

- . k1 et k2 représentent des coefficients caractéristiques,
- . hc et vc représentent des termes de précommande, de valeurs non nulles lorsque l'aéronef se trouve en situation de capture de la trajectoire, et de valeurs nulles lorsque l'aéronef se trouve en situation de suivi de la trajectoire, et
- . le produit k1.(he-hc) est limité entre deux valeurs prédéfinies ; et

- on applique à l'aéronef, comme ordre de commande, la variation d'accélération verticale $\Delta nz$ ainsi calculée et limitée entre deux valeurs prédéfinies.

Ainsi, grâce à ladite variation d'accélération verticale appliquée à l'aéronef, on obtient un guidage précis et peu brusque de l'aéronef suivant ladite trajectoire prédéfinie.

On notera que ladite variation d'accélération verticale peut être transformée en une variation d'assiette qui est alors transmise directement comme ordre de commande le cas échéant au pilote automatique de l'aéronef, par exemple d'un avion de transport civil, un pilote automatique utilisant généralement comme entrée une variation d'assiette.

De plus, le régime du moteur de l'aéronef varie peu, ce qui entraîne une réduction à la fois de la consommation de carburant et de la fatigue du moteur.

On notera en outre que les termes de précommande permettent à l'aéronef de revenir sur ladite trajectoire prescrite suivant un trajet prédéfini.

De façon avantageuse, pour augmenter davantage encore le confort :

- d'une part, on limite le produit k1.(he-hc) entre deux valeurs dépendant de la phase de vol et permettant de guider l'aéronef avec une vitesse verticale limitée. Avantageusement, une limite inférieure de -10 m/s peut être retenue en approche ; et
- d'autre part, on limite la variation d'accélération verticale appliquée comme ordre de commande de l'aéronef entre deux valeurs, avantageusement plus et moins 0,08 g, g représentant l'accélération de la pesanteur, permettant un guidage peu brusque de l'aéronef.

Selon l'invention, l'aéronef est considéré en situation de capture d'un segment rectiligne de la trajectoire lorsqu'il peut rejoindre ledit segment rectiligne avec une accélération verticale constante, ce qui nécessite le moins de variations brusques de l'assiette de l'aéronef et permet donc d'augmenter le confort.

Plus précisément, de façon avantageuse, l'aéronef est considéré en situation de capture de la trajectoire lorsque les conditions suivantes sont vérifiées :

- l'accélération verticale constante Nz=(ve$^2$)/(2he), avec laquelle l'aéronef pourrait capturer la trajectoire prescrite, est comprise dans un intervalle prédéfini, de préférence plus et moins 0,15 g ;
- les termes ve et he sont de signes opposés ; et
- la vitesse de l'aéronef est limitée à une valeur prédéfinie.

En outre, de façon avantageuse, on détermine les termes de précommande hc et vc qui vont permettre de guider l'aéronef suivant un trajet de capture à accélération verticale constante Nzo à partir des relations suivantes :

$$\begin{cases} \text{vc} & = & - \int \text{Nzo.dt} + \text{veo} \\ \text{hc} & = & \int \text{vc.dt} + \text{heo} \end{cases}$$

dans lesquelles :

- veo et heo sont les valeurs respectivement de ve et he au début de la capture, et
- Nzo est défini par la relation Nzo=(veo$^2$)/(2heo).

De plus, l'aéronef considéré en situation de capture, passe en situation de suivi, lorsque la différence de vitesse ve devient inférieure à un seuil prédéterminé.

Par ailleurs, avantageusement, pour déterminer ledit segment de guidage, ladite trajectoire présentant une altitude décroissante, avec éventuellement des paliers :

a) lors de la mise en oeuvre initiale du procédé, on détermine un segment initial comme segment de guidage ; et
b) on détermine au cours du guidage comme segment de guidage le segment suivant, dans le sens de déplacement de l'aéronef, du segment de guidage actuel, à chaque fois qu'une des situations suivantes est vérifiée :

- l'altitude de l'aéronef est inférieure à l'altitude du point extrême, dans le sens de déplacement de l'aéronef, dudit segment de guidage actuel ;
- l'aéronef est en aval, dans le sens de déplacement, dudit point extrême du segment de guidage actuel ;
- l'aéronef est en situation de suivi dudit segment de guidage actuel et il est en situation de capture effective du segment suivant ; et
- l'aéronef est en situation de capture à la fois du segment de guidage actuel et du segment suivant, mais il ne peut plus revenir sur ledit segment de guidage actuel avant d'avoir dépassé le point extrême dudit segment de guidage actuel.

En outre, selon l'invention, les coefficients caractéristiques k1 et k2 sont calculés avantageusement à partir des relations :

$$k1 = w/(2.\xi) \qquad k2 = (2.\xi.w)/g$$

dans lesquelles :

- g représente l'accélération de la pesanteur,
- ξ représente un terme d'amortissement, et
- w représente un terme de pulsation à la fréquence de résonance.

Bien entendu, en ce qui concerne lesdits termes ξ et w, on utilise pour la mise en oeuvre de l'invention des valeurs déterminées par l'homme du métier à partir de la théorie. Toutefois, selon l'invention, pour obtenir les valeurs les plus avantageuses pour un aéronef déterminé, de préférence, on effectue dans une seconde étape une pluralité de guidages avec des termes différents permettant d'affiner les paramètres déterminés par la théorie et on utilise pour la mise en oeuvre du procédé les valeurs pour lesquelles la capture et le suivi de la trajectoire sont effectués de façon optimale, par rapport à des conditions prédéfinies.

La présente invention concerne également un dispositif pour la mise en oeuvre du procédé précité.

Selon l'invention, ledit dispositif pour guider un aéronef dans un plan vertical pour capturer et suivre une trajectoire prescrite définie dans ledit plan vertical et formée de segments rectilignes successifs, est remarquable en ce qu'il comporte :

- une première unité de calcul susceptible de déterminer le segment rectiligne de ladite trajectoire par rapport auquel ledit aéronef doit être guidé et comprenant :

  . un premier calculateur susceptible de déterminer la distance verticale he, entre ledit aéronef et le segment de guidage ainsi déterminé, et
  . un second calculateur susceptible de déterminer la différence de vitesse ve entre la vitesse verticale effective de l'aéronef et la vitesse verticale qu'il aurait s'il se déplaçait le long dudit segment de guidage, pour une même vitesse parallèlement au sol ; et

- une seconde unité de calcul reliée à ladite première unité de calcul, susceptible de calculer une variation d'accélération verticale Δnz et de la transmettre au pilote automatique de l'aéronef, ladite variation d'accélération verticale Δnz étant calculée à partir de la relation :

$$\Delta nz = ((k1.(he\text{–}hc)) + (ve\text{–}vc)).k2$$

dans laquelle :

  . k1 et k2 représentent des coefficients caractéristiques,
  . hc et vc représentent des termes de précommande, de valeurs non nulles lorsque l'aéronef se trouve en situation de capture de la trajectoire, et de valeurs nulles lorsque l'aéronef se trouve en situation de suivi de la trajectoire, et
  . le produit k1.(he–hc) est limité entre deux valeurs prédéfinies.

De façon avantageuse, ladite seconde unité de calcul comporte :

- un calculateur auxiliaire susceptible de calculer les termes de précommande hc et vc ;
- un premier calculateur relié audit calculateur auxiliaire et susceptible de calculer la différence he-hc ;
- un deuxième calculateur relié audit premier calculateur et susceptible de calculer le produit k1.(he-hc) ;
- un troisième calculateur susceptible de limiter la valeur calculée et fournie par le deuxième calculateur ;
- un quatrième calculateur relié audit calculateur auxiliaire et susceptible de calculer la différence ve-vc ;
- un cinquième calculateur susceptible de calculer la somme des résultats fournis par les troisième et quatrième calculateurs ;
- un sixième calculateur susceptible de multiplier par k2 le résultat fourni par le cinquième calculateur ; et
- un septième calculateur susceptible de limiter le résultat fourni par le sixième calculateur et de transmettre ce résultat comme ordre de commande.

Par ailleurs, le dispositif conforme à l'invention peut comporter un moyen susceptible de déterminer si l'aéronef est en situation de capture de la trajectoire.

Les figures du dessin annexé feront bien comprendre comment l'invention peut être réalisée. Sur ces figures, des références identiques désignent des éléments semblables.

La figure 1 est le schéma synoptique d'un dispositif conforme à l'invention.

La figure 2 illustre le mode de guidage selon l'invention d'un aéronef par rapport à une trajectoire prédéfinie.

La figure 3 est le schéma synoptique d'un calculateur auxiliaire du dispositif conforme à l'invention.

Les figures 4 à 7 illustrent quatre situations différentes pour lesquelles il est nécessaire d'effectuer un changement de segment de guidage.

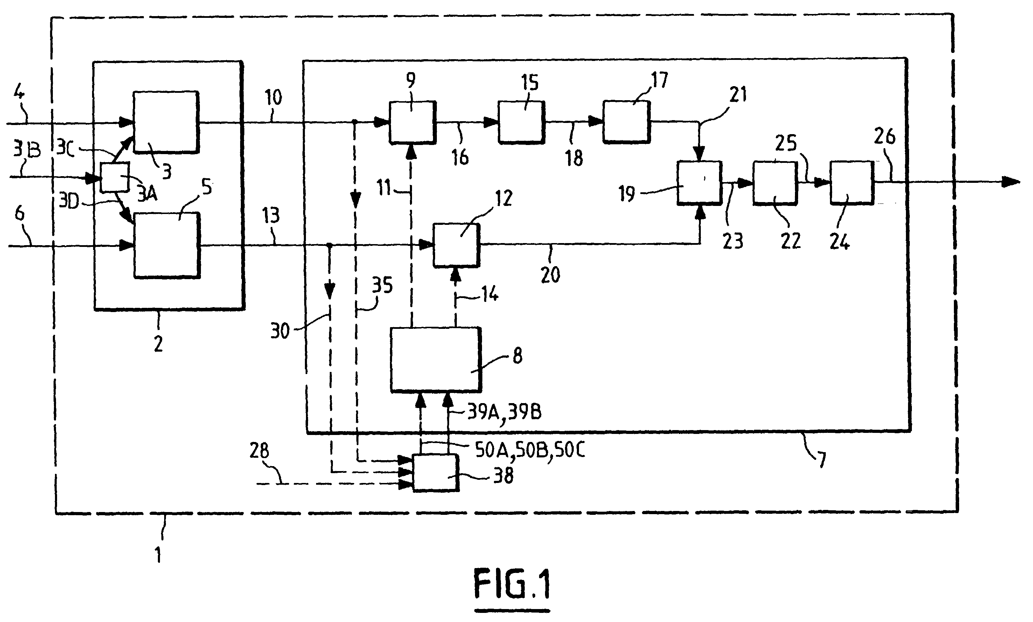

Le dispositif 1 conforme à l'invention et représenté de façon schématique sur la figure 1 est destiné à être embarqué à bord d'un aéronef A, en particulier un avion de transport, pour guider ledit aéronef A dans un plan vertical le long d'une trajectoire prédéfinie T.

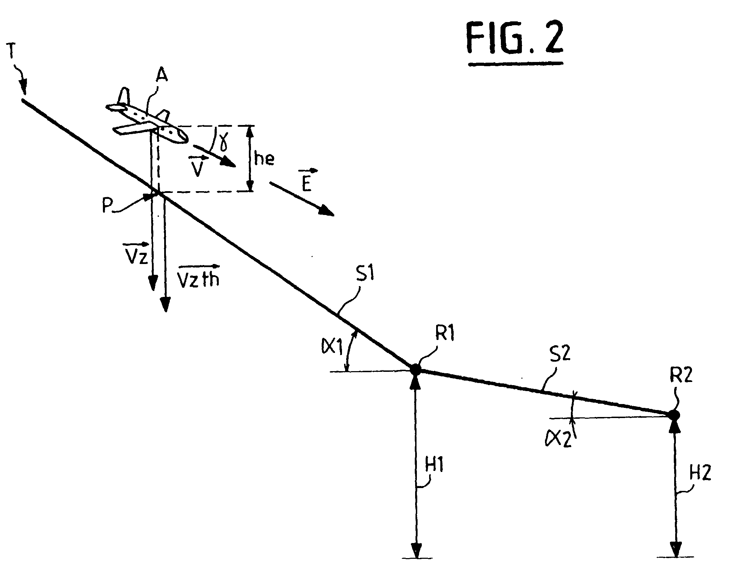

Dans le cadre de la présente invention, ladite trajectoire prédéfinie T, partiellement représentée sur la figure 2, est formée de segments rectilignes successifs S1, S2. Chacun desdits segments rectilignes S1 et S2 présente une pente constante $\alpha1$, $\alpha2$ par rapport à l'horizontale. Lesdits segments rectilignes Si et S2 sont de plus caractérisés par la position de leur point extrême R1 et R2 dans le sens de déplacement ($\vec{E}$) de l'aéronef A.

Selon la position au début du guidage dudit aéronef A par rapport à ladite trajectoire T, le guidage envisagé est effectué, soit à partir des deux phases suivantes, soit uniquement à partir de la dernière desdites phases, à savoir :

- une phase de capture destinée à amener l'aéronef A sur ladite trajectoire T, et
- une phase de suivi permettant de déplacer l'aéronef A situé sur ladite trajectoire T le long de celle-ci.

Ledit dispositif 1 met en oeuvre un procédé de guidage conforme à l'invention permettant audit aéronef A de capturer et de suivre, de façon simple, précise et peu brusque, ladite trajectoire T.

Selon l'invention, ledit procédé est remarquable en ce que :

- on détermine le segment S1 ou S2 de ladite trajectoire T par rapport auquel l'aéronef A doit être guidé, à savoir le segment S1 dans l'exemple représenté, comme on le verra ci-après ;
- on détermine la distance verticale he entre ledit aéronef A et sa projection verticale P sur le segment de guidage S1 déterminé précédemment ;
- on détermine la différence de vitesse ve entre la vitesse verticale effective Vz de l'aéronef A et la vitesse verticale Vzth qu'il aurait s'il se déplaçait le long dudit segment de guidage S1, pour une même vitesse parallèlement au sol ;
- on calcule une variation d'accélération verticale $\Delta$nz de l'aéronef A à partir de la relation :

$$\Delta nz = ((k1.(he-hc)) + (ve-vc)).k2 \tag{1}$$

dans laquelle :

- k1 et k2 représentent des coefficients caractéristiques précisés ci-dessous,
- hc et vc représentent des termes de précommande, de valeurs non nulles lorsque l'aéronef se trouve en situation de capture de la trajectoire T, et de valeurs nulles lorsque l'aéronef se trouve en situation de suivi de la trajectoire T, tel que précisé ci-après, et
- le produit k1.(he-hc) est limité entre deux valeurs prédéfinies ; et

- on applique comme ordre de commande à l'aéronef A la variation d'accélération verticale $\Delta$nz ainsi calculée et limitée entre deux valeurs prédéfinies.

Pour bien mettre en évidence la précision de la présente invention, on explicite ci-dessous l'expression (1) précitée, et notamment le calcul des coefficients caractéristiques k1 et k2, en référence à la figure 2.

L'accélération verticale nz de l'aéronef A est définie, d'après des équations connues de la mécanique du vol, à partir de l'expression :

$$nz = \cos\gamma + (Vsol.\dot{\gamma}) / g$$

dans laquelle :

- Vsol est la vitesse par rapport au sol de l'aéronef (prend en compte les effets de vent),
- $\gamma$ est l'angle entre ledit vecteur vitesse $\vec{V}$ et l'horizontale, et
- g représente l'accélération de la pesanteur.

En supposant que l'angle $\gamma$ est petit et que le terme Vsol varie lentement, on obtient l'approximation suivante :

$$Vz = Vsol.\sin\gamma \simeq Vsol.\gamma$$

On en déduit que :

$$nz = 1 + (\dot{V}z)/g = 1 + \Delta nz, \text{ en posant } \Delta nz = (\dot{V}z)/g$$

De plus, d'après la définition de ve et he, on a la relation :

$$\ddot{he} = \dot{ve} = -\dot{V}z$$

de sorte qu'en notations de Laplace, on obtient le système suivant :

$$\begin{cases} ve & = & -(1/p).(\dot{V}z) \\ he & = & -(1/p^2).(\dot{V}z) \end{cases}$$

De plus, d'après un résultat classique de mathématique, pour déterminer un paramètre $\Delta nz$ à partir de deux paramètres variables ve et he, il faut utiliser une loi du type :

$$\Delta nz = c1.he + c2.ve \tag{1bis}$$

avec c1 et c2 deux coefficients caractéristiques.
De la relation (1bis), on déduit l'expression :

$$\Delta nz = -(c1/p^2).\dot{V}z -(c2/p).\dot{V}z$$

qui permet d'obtenir l'équation :

$$p^2 + c2.g.p + c1.g = 0$$

En identifiant cette dernière équation à une équation du second degré du type :

$$p^2 + 2.\xi.w.p + w^2 = 0$$

avec $\xi$ un terme d'amortissement et w la pulsation à la fréquence de résonance, on obtient les valeurs suivantes des coefficients c1 et c2 :

$$c1 = (w^2)/g \tag{2}$$

$$c2 = (2.\xi.w)/g \tag{3}$$

Ladite formule (1bis) peut s'écrire :

$$\Delta nz = c2.(\frac{c1}{c2}.he+ve) \tag{3bis}$$

Pour la suite, on posera :

$$k1 = \frac{c1}{c2} \quad \text{et} \quad k2 = c2 \quad\quad\quad\quad (3ter)$$

Par conséquent, pour limiter la vitesse verticale, afin d'éviter par exemple que l'aéronef ne vienne trop directement et trop rapidement sur le segment de guidage, il suffit de limiter l'expression (k1.he).

De plus, la relation (3bis) diffère de la relation (1), uniquement en raison des termes de précommande hc et vc introduits dans ladite relation (1). Le rôle et le mode de calcul de ces termes de précommande hc et vc seront précisés dans la suite de la description.

On notera par ailleurs que, pour les termes $\xi$ et w, on peut utiliser des valeurs préconisées par la théorie.

Toutefois, afin d'obtenir les valeurs les plus avantageuses pour un aéronef A déterminé, ainsi que pour des conditions de guidage déterminées, selon l'invention, on effectue dans une seconde étape une pluralité de guidages avec des termes différents permettant d'affiner les paramètres déterminés par la théorie et on utilise pour la mise en oeuvre du procédé les valeurs pour lesquelles la capture et le suivi de la trajectoire sont effectués de façon optimale, par rapport à ces conditions prédéfinies. Cette seconde étape préliminaire, dont on n'a pas représenté les moyens pour réaliser sa mise en oeuvre, peut être réalisée sous forme de simulations ou sous forme de guidages effectifs dans des conditions de vol réelles.

Le procédé décrit précédemment présente de nombreux avantages, en particulier :

- un guidage précis et peu brusque,
- une variation réduite du régime du moteur, donc une consommation de carburant réduite,
- un grand confort pour les passagers, et
- des contraintes réduites sur l'aéronef.

Pour la mise en oeuvre dudit procédé conforme à l'invention, le dispositif 1 comporte, tel que représenté sur la figure 1 :

- une unité de calcul 2 susceptible de déterminer le segment de guidage S1 et comprenant :

  - un calculateur 3A recevant des informations (à savoir la trajectoire verticale, la position et l'altitude de l'aéronef) par des moyens connus non représentés par l'intermédiaire d'une liaison 3B, et susceptible de calculer le segment de guidage S1 ;
  - un calculateur 3 relié par une liaison 3C au calculateur 3A, recevant des informations (à savoir la position et l'altitude de l'aéronef A) à partir de moyens connus non représentés par l'intermédiaire d'une liaison 4, et susceptible de calculer la distance verticale he ; et
  - un calculateur 5 relié par une liaison 3D au calculateur 3A, recevant des informations (à savoir les vitesses Vz et Vzth) à partir de moyens connus non représentés par l'intermédiaire d'une liaison 6, et susceptible de déterminer la différence de vitesse ve ; et

- une unité de calcul 7 reliée à ladite unité de calcul 2, tel que précisé ci-dessous, et susceptible de calculer et de transmettre la variation d'accélération verticale $\Delta nz$ à appliquer à l'aéronef A pour le guidage.

A cet effet, ladite unité de calcul 7 comporte selon l'invention :

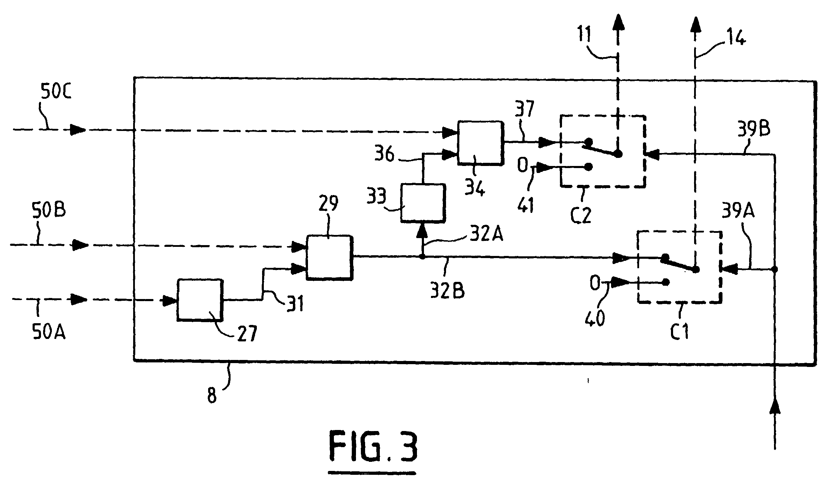

- un calculateur auxiliaire 8 représenté sur la figure 3 et susceptible de calculer les termes de précommande hc et vc, utilisés lorsque l'aéronef A est en situation de capture de la trajectoire T, tel que précisé ci-dessous ;
- un calculateur 9 relié par l'intermédiaire de liaisons 10 et 11 respectivement audit calculateur 3 et audit calculateur auxiliaire 8 et susceptible de calculer la différence he-hc ;
- un calculateur 12 relié respectivement par l'intermédiaire de liaisons 13 et 14 audit calculateur 5 et audit calculateur auxiliaire 8 et susceptible de calculer la différence ve-vc ;
- un calculateur 15 relié au calculateur 9 par une liaison 16 et susceptible de calculer l'expression k1.(he-hc), k1 étant déterminé à partir des relations (2), (3) et (3ter) précitées, à savoir k1 = w/(2.$\xi$) ;
- un calculateur 17 recevant les résultats des traitements du calculateur 15 par une liaison 18 et susceptible de limiter lesdits résultats de manière à obtenir une limitation de la vitesse verticale Vz de l'aéronef A ;
- un calculateur 19 relié par des liaisons 20 et 21 respectivement aux calculateurs 12 et 17 et susceptible de calculer la somme des résultats reçus de ces calculateurs 12 et 17 ;
- un calculateur 22 calculant, à partir des résultats fournis par le calculateur 19 par une liaison 23, l'expression $\Delta nz$= ((k1.(he-hc))+(ve-vc)).k2, k2 étant déterminé à partir des relations (3) et (3ter) précitées, à savoir k2 = (2.$\xi$.w)/g ; et
- un calculateur 24 recevant ce résultat par une liaison 25 et susceptible de limiter la valeur $\Delta nz$ reçue entre deux

valeurs prédéfinies, par exemple plus et moins 0,08 g. Ceci permet d'obtenir une commande limitée en accélération verticale et donc un grand confort de guidage.

Le calculateur 24 peut transmettre ce résultat par une liaison 26 à un dispositif utilisateur non représenté, notamment au pilote automatique de l'aéronef A si ce dernier est équipé d'un pilote automatique.

Par ailleurs, selon l'invention, ledit calculateur auxiliaire 8 destiné à déterminer les termes de précommande hc et vc comporte, tel que représenté sur la figure 3 :

- un calculateur 27 susceptible de calculer l'expression $\int$Nzo.dt, c'est-à-dire l'intégrale par rapport au temps de l'accélération Nzo. Cette accélération Nzo, qui correspond à l'accélération verticale avec laquelle on veut que l'aéronef A vienne rejoindre le segment de guidage, est transmise au calculateur 27 par une liaison 50A précisée ci-dessous ;
- un calculateur 29 calculant la différence entre une valeur veo, correspondant à la valeur de ve au début du guidage et reçue par une liaison 50B précisée ci-dessous, et le résultat fourni par le calculateur 27 par une liaison 31. Ledit calculateur 29 présente une sortie à double liaison 32A et 32B ;
- un calculateur 33 relié à ladite liaison 32A et intégrant par rapport au temps les résultats fournis par le calculateur 29 ;
- un calculateur 34 faisant la somme d'une valeur heo, correspondant à la valeur de he au début de la capture et reçue par une liaison 50C précisée ci-dessous, et du résultat fourni par le calculateur 33 par une liaison 36 ; et
- deux moyens de commutation C1 et C2 reliés respectivement audit calculateur 29 par l'intermédiaire de la liaison 32B et audit calculateur 34 par l'intermédiaire d'une liaison 37.

Dans le cas de la capture d'un nouveau segment, les intégrateurs sont remis à 0 et l'intégration se fait avec le nouveau Nzo.

Lesdits moyens de commutation C1 et C2 sont commandés par un moyen de calcul 38 raccordé respectivement par l'intermédiaire de liaisons 39A et 39B.

Ledit moyen de calcul 38 est destiné à déterminer si l'aéronef A est en situation de capture du segment de guidage ou non, tel que précisé ci-dessous. Ledit moyen de calcul 38 qui reçoit notamment les valeurs he et ve, ainsi que la vitesse de l'aéronef, est susceptible de calculer les valeurs heo, veo et Nzo.

A cet effet, ledit moyen de calcul 38 comporte, en plus des liaisons 39A et 39B précitées :

- à son entrée :

  . une liaison 35 reliée à la liaison 10, pour fournir audit moyen de calcul 38 la valeur he ;
  . une liaison 30 reliée à la liaison 13, pour fournir audit moyen de calcul 38 la valeur ve ; et
  . une liaison 28 reliée à un moyen approprié non représenté, pour fournir audit moyen de calcul 38 la vitesse de l'aéronef A ; et

- à sa sortie, les liaisons 50A, 50B et 50C, pour fournir au calculateur auxiliaire 8 les données précitées.

Le moyen de traitement du moyen de calcul 38 est décrit ci-dessous.

Lorsque l'aéronef A est en situation de capture de la trajectoire prescrite, les moyens de commutation C1 et C2 sont commandés de sorte que les liaisons 14 et 11 sont raccordées respectivement auxdites liaisons 32B et 37. En revanche, lorsque l'aéronef n'est pas en situation de capture, ces liaisons 14 et 11 sont reliées à des liaisons 40 et 41 transmettant des valeurs nulles.

Ainsi, le calculateur auxiliaire 8 transmet comme termes de précommande les valeurs :

-

$$\begin{cases} \text{vc} = -\int \text{Nzo.dt} + \text{veo} \\ \text{hc} = \int \text{vc.dt} + \text{heo} \end{cases}$$

lorsque l'aéronef A est en situation de capture de la trajectoire, et
- vc = hc = 0
dans le cas contraire (c'est-à-dire notamment lorsque l'aéronef A est situé sur un segment rectiligne qu'il est en train de suivre).

Selon l'invention, l'aéronef A est en situation de capture d'un segment rectiligne lorsqu'il peut rejoindre ledit segment rectiligne avec une accélération verticale constante.

Plus précisément, ceci est réalisé lorsque les conditions suivantes sont vérifiées :

- l'accélération verticale constante, avec laquelle l'aéronef pourrait capturer la trajectoire, est comprise dans un intervalle prédéfini, de préférence plus et moins 0,15 g, g étant l'accélération de la pesanteur ;
- les termes ve et he sont de signes opposés ; et
- la vitesse de l'aéronef est limitée à une valeur prédéfinie, pour laquelle la capture peut être effectuée de façon peu brusque.

Le dispositif 1 comporte également un moyen intégré par exemple dans l'unité de calcul 2, et permettant de déterminer un changement de segment de guidage sur ladite trajectoire prédéfinie T, c'est-à-dire un changement du segment à prendre en compte pour la mise en oeuvre du guidage. Dans le cadre de la présente invention, on appelle segment de guidage actuel, le segment de guidage à l'instant considéré.

Selon l'invention, on change de segment de guidage et on considère comme nouveau segment de guidage, le segment S2 suivant du segment de guidage actuel S1 (dans le sens de déplacement $\vec{E}$ de l'aéronef A), à chaque fois qu'une des situations suivantes est vérifiée :

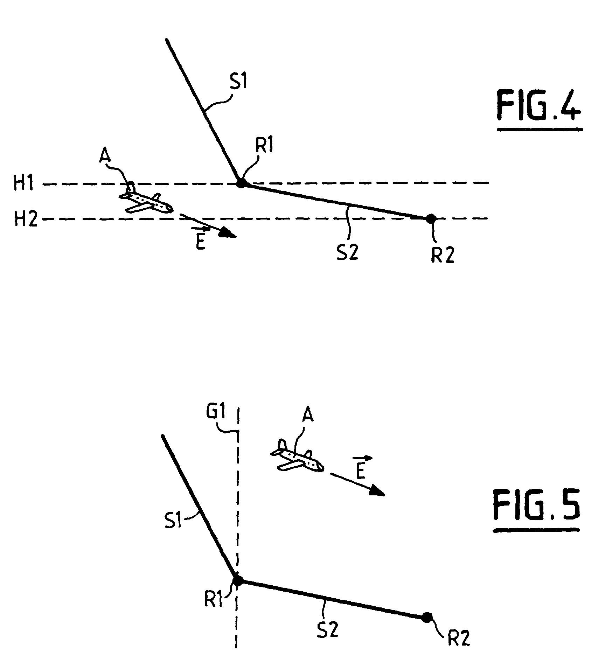

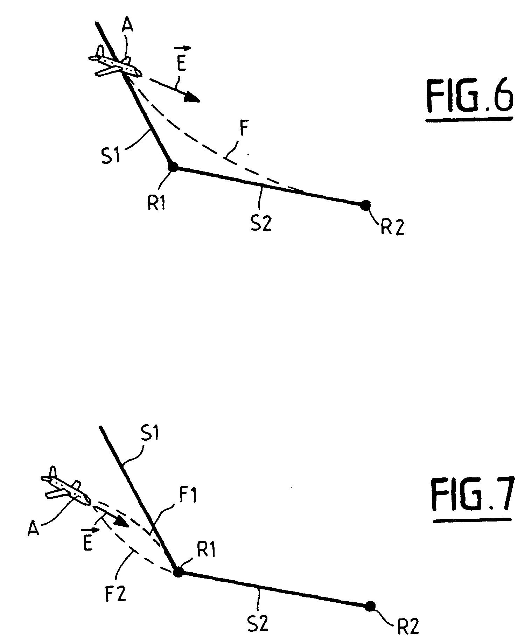

- l'altitude de l'aéronef A est inférieure à l'altitude H1 du point extrême R1, dans le sens de déplacement $\vec{E}$ de l'aéronef A, dudit segment de guidage actuel S1, tel que représenté sur la figure 4 ;
- l'aéronef A est en aval, dans le sens de déplacement $\vec{E}$, dudit point extrême R1 du segment de guidage actuel S1, tel qu'illustré sur la figure 5 au moyen de la verticale G1 passant par le point R1 ;
- l'aéronef A est en situation de suivi dudit segment de guidage actuel S1 et il est en situation de capture du segment suivant S2 (qu'il peut rejoindre en suivant un trajet optimal F engendré par le guidage conforme à l'invention), tel que représenté sur la figure 6 ; ou
- l'aéronef A est en situation de capture à la fois du segment de guidage actuel S1 (comme illustré par un trajet F1 sur la figure 7) et du segment suivant S2 (comme illustré par un trajet F2), mais il ne peut plus revenir sur le segment de guidage actuel S1 avant d'avoir dépassé le point extrême R1 dudit segment de guidage actuel S1.

On remarquera que, grâce à l'invention, on obtient par ailleurs un dépassement limité par rapport à un segment de guidage lors de la capture d'un tel segment de guidage.

L'exemple de réalisation non limitatif décrit précédemment permet de bien mettre en évidence les nombreux avantages de la présente invention.

Bien entendu, dans le cadre de la présente invention, le procédé précité peut être mis en oeuvre par un seul calculateur ou par toute autre architecture de calcul appropriée.

**Revendications**

1. Procédé de guidage d'un aéronef (A) dans un plan vertical pour capturer et suivre une trajectoire prescrite (T) définie dans ledit plan vertical et formée de segments rectilignes successifs (S1, S2),
**caractérisé en ce que** l'on effectue de façon répétitive les opérations suivantes :

   - on détermine le segment rectiligne (S1) de ladite trajectoire (T) par rapport auquel ledit aéronef (A) doit être guidé ;
   - on détermine la distance verticale he entre ledit aéronef (A) et le segment de guidage (S1) ainsi déterminé ;
   - on détermine la différence de vitesse ve entre la vitesse verticale effective (Vz) de l'aéronef (A) et la vitesse verticale (Vzth) qu'il aurait s'il se déplaçait le long dudit segment de guidage (S1), pour une même vitesse parallèlement au sol ;
   - on calcule une variation d'accélération verticale Δnz à partir de la relation :

$$\Delta nz = ((k1.(he-hc)) + (ve-vc)).k2$$

   dans laquelle :

   - k1 et k2 représentent des coefficients caractéristiques,
   - hc et vc représentent des termes de précommande, de valeurs non nulles lorsque l'aéronef se trouve en situation de capture de la trajectoire, et de valeurs nulles lorsque l'aéronef se trouve en situation de suivi de la trajectoire, et

. le produit k1.(he-hc) est limité entre deux valeurs prédéfinies ; et

- on applique à l'aéronef (A), comme ordre de commande, la variation d'accélération verticale Δnz ainsi calculée et limitée entre deux valeurs prédéfinies.

2. Procédé selon la revendication 1,
   **caractérisé en ce que** le produit k1.(he-hc) est limité entre deux valeurs permettant de guider l'aéronef (A) à vitesse verticale (Vz) limitée.

3. Procédé selon l'une des revendications 1 ou 2,
   **caractérisé en ce que** la variation d'accélération verticale appliquée comme ordre de commande à l'aéronef est limitée entre deux valeurs permettant un guidage peu brusque de l'aéronef (A).

4. Procédé selon l'une des revendications 1 à 3,
   **caractérisé en ce que** l'aéronef (A) est considéré en situation de capture d'un segment rectiligne (Si) de la trajectoire (T) lorsqu'il peut rejoindre ledit segment rectiligne (Si) avec une accélération verticale constante.

5. Procédé selon la revendication 4,
   **caractérisé en ce que** l'aéronef (A) est considéré en situation de capture de la trajectoire (T) lorsque les conditions suivantes sont vérifiées ;

   - l'accélération verticale constante Nz=(ve$^2$)/(2he), avec laquelle l'aéronef (A) pourrait capturer ladite trajectoire prescrite, est comprise dans un intervalle prédéfini ;
   - les termes ve et he sont de signes opposés ; et
   - la vitesse de l'aéronef (A) est limitée à une valeur prédéfinie, pour laquelle la capture peut être effectuée de façon peu brusque.

6. Procédé selon l'une quelconque des revendications 1 à 5,
   **caractérisé en ce que** l'aéronef (A) considéré en situation de capture, passe en situation de suivi, lorsque la différence de vitesse ve devient inférieure à un seuil prédéterminé.

7. Procédé selon l'une quelconque des revendications précédentes,
   **caractérisé en ce que** l'on détermine les termes de précommande hc et vc à partir des relations suivantes :

$$\begin{cases} vc & = & -\int Nzo.dt + veo \\ hc & = & \int vc.dt + heo \end{cases}$$

dans lesquelles :

   - veo et heo sont les valeurs respectivement de ve et he au début de la capture, et
   - Nzo est défini par la relation Nzo=(veo$^2$)/(2heo).

8. Procédé selon l'une des revendications précédentes,
   **caractérisé en ce que**, pour déterminer ledit segment de guidage, ladite trajectoire (T) présentant une altitude décroissante, avec éventuellement des paliers :

   a) lors de la mise en oeuvre initiale du procédé, on détermine un segment initial comme segment de guidage ; et
   b) on détermine au cours du guidage comme segment de guidage le segment suivant (S2), dans le sens de déplacement ($\vec{E}$) de l'aéronef (A), du segment de guidage actuel (S1), à chaque fois qu'au moins une des situations suivantes est vérifiée :

   - l'altitude de l'aéronef (A) est inférieure à l'altitude (H1) du point extrême (R1), dans le sens de déplacement ($\vec{E}$) de l'aéronef (A), dudit segment de guidage actuel (S1) ;
   - l'aéronef (A) est en aval, dans le sens de déplacement ($\vec{E}$), dudit point extrême (R1) du segment de guidage actuel (S1) ;

**EP 0 834 787 B1**

- l'aéronef (A) est en situation de suivi dudit segment de guidage actuel (S1) et il est en situation de capture du segment suivant (S2) ; et
- l'aéronef (A) est en situation de capture à la fois du segment de guidage actuel (Si) et du segment suivant (S2), mais il ne peut plus revenir sur ledit segment de guidage actuel (S1) avant d'avoir dépassé le point extrême (R1) dudit segment de guidage actuel (S1).

9. Procédé selon l'une quelconque des revendications précédentes,
**caractérisé en ce que** les coefficients caractéristiques k1 et k2 sont calculés à partir des relations :

$$k1 = w/(2.\xi) \qquad k2 = (2.\,\xi.w)/g$$

dans lesquelles :

- g représente l'accélération de la pesanteur,
- $\xi$ représente un terme d'amortissement, et
- w représente un terme de pulsation à la fréquence de résonance.

10. Procédé selon la revendication 9,
**caractérisé en ce que**, pour préciser les valeurs des termes $\xi$ et w, on effectue une pluralité de guidages avec des termes différents permettant d'affiner les paramètres déterminés par la théorie et on utilise pour la mise en oeuvre du procédé les valeurs pour lesquelles la capture et le suivi de la trajectoire sont effectués de façon optimale, par rapport à des conditions prédéfinies.

11. Dispositif pour guider un aéronef (A) dans un plan vertical pour capturer et suivre une trajectoire prescrite(T) définie dans ledit plan vertical et formée de segments rectilignes successifs (S1,S2),
**caractérisé en ce qu'**il comporte :

- une première unité de calcul (2) susceptible de déterminer le segment (S1) de ladite trajectoire (T) par rapport auquel ledit aéronef (A) doit être guidé et comprenant :

  . un premier calculateur (3) susceptible de déterminer la distance verticale he entre ledit aéronef (A) et le segment de guidage (S1) ainsi déterminé, et
  . un second calculateur (5) susceptible de déterminer la différence de vitesse ve entre la vitesse verticale effective (Vz) de l'aéronef (A) et la vitesse verticale (Vzth) qu'il aurait s'il se déplaçait le long dudit segment de guidage (S1), pour une même vitesse parallèlement au sol ; et

- une seconde unité de calcul (7) reliée à ladite première unité de calcul (2), susceptible de calculer une variation d'accélération verticale $\Delta$nz et de la transmettre au pilote automatique de l'aéronef, ladite variation d'accélération verticale $\Delta$nz étant calculée à partir de la relation :

$$\Delta nz = ((k1.(he\text{-}hc)) + (ve\text{-}vc)).k2$$

dans laquelle :

  . k1 et k2 représentent des coefficients caractéristiques,
  . hc et vc représentent des termes de précommande, de valeurs non nulles lorsque l'aéronef se trouve en situation de capture de la trajectoire, et de valeurs nulles lorsque l'aéronef se trouve en situation de suivi de la trajectoire, et
  . le produit k1.(he-hc) est limité entre deux valeurs prédéfinies.

12. Dispositif selon la revendication 11,
**caractérisé en ce que** ladite seconde unité de calcul (7) comporte :

- un calculateur auxiliaire (8) susceptible de calculer les termes de précommande hc et vc ;
- un premier calculateur (9) relié audit calculateur auxiliaire (8) et susceptible de calculer la différence he-hc ;
- un deuxième calculateur (15) relié audit premier calculateur (9) et susceptible de calculer le produit k1.(he-hc) ;

**11**

- un troisième calculateur (17) susceptible de limiter la valeur calculée et fournie par le deuxième calculateur (15) ;
- un quatrième calculateur (12) relié audit calculateur auxiliaire (8) et susceptible de calculer la différence ve-vc ;
- un cinquième calculateur (19) susceptible de calculer la somme des résultats fournis par les troisième et quatrième calculateurs (17, 12) ;
- un sixième calculateur (22) susceptible de multiplier par k2 le résultat fourni par le cinquième calculateur (19) ; et
- un septième calculateur (24) susceptible de limiter le résultat fourni par le sixième calculateur (22) et de transmettre ce résultat comme ordre de commande.

13. Dispositif selon l'une des revendications 11 ou 12,
**caractérisé en ce qu'**il comporte un moyen (38) susceptible de déterminer si ledit aéronef (A) est en situation de capture de la trajectoire (T).

## Claims

1. Method for guiding an aircraft (A) in a vertical plane in order to join and follow a prescribed flight path (T) which is defined in the said vertical plane and is formed by successive straight segments (S1, S2),
**characterized in that** the following operations are performed repeatedly:

   - the straight segment (S1) which belongs to the said flight path (T) and relative to which the said aircraft (A) is to be guided, is determined;
   - the vertical distance he, between the said aircraft (A) and the guidance segment (S1) thus determined, is determined;
   - the velocity difference ve between the actual vertical velocity (Vz) of the aircraft (A) and the vertical velocity (Vzth) which it would have if it moved along the said guidance segment (S1), for an equal velocity parallel to the ground, is determined;
   - a vertical acceleration variation ∆nz is calculated from the equation:

   $$\Delta nz = ((k1.(he-hc)) + (ve-vc)).k2$$

   in which:

   · k1 and k2 represent characteristic coefficients,
   · hc and vc represent precontrol terms, of non-zero values when the aircraft is in flight path joining status, and of zero values when the aircraft is in flight path following status, and
   · the product k1.(he-hc) is restricted between two predefined values; and

   - the vertical acceleration variation ∆nz thus calculated and restricted between two predefined values is applied as control input to the aircraft (A).

2. Method according to Claim 1, **characterized in that** the product k1.(he-hc) is restricted between two values making it possible to guide the aircraft (A) at restricted vertical velocity (Vz).

3. Method according to either of Claims 1 and 2,
**characterized in that** the vertical acceleration variation applied as control input to the aircraft is restricted between two values allowing smooth guidance of the aircraft (A).

4. Method according to one of Claims 1 to 3,
**characterized in that** the aircraft (A) is considered to be in joining status for a straight segment (S1) of the flight path (T) when it can join the said straight segment (S1) with a constant vertical acceleration.

5. Method according to Claim 4, **characterized in that** the aircraft (A) is considered to be in joining status for the flight path (T) when the following conditions are satisfied:

   - the constant vertical acceleration $Nz=(ve^2)/(2he)$ with which the aircraft (A) could join the said prescribed trajectory lies in a predefined interval;
- the terms ve and he are of opposite signs; and
- the velocity of the aircraft (A) is restricted to a predefined value, for which joining can be carried out smoothly.

6. Method according to any one of Claims 1 to 5,
   **characterized in that** the aircraft (A), considered to be in joining status, changes to following status when the velocity difference ve becomes less than a predetermined threshold.

7. Method according to any one of the preceding claims, **characterized in that** the precontrol terms hc and vc are determined from the following equations:

$$vc = - \int Nzo.dt + veo$$

$$hc = \int vc.dt + heo$$

in which:

- veo and heo are the values of ve and he respectively at the start of joining, and
- Nzo is defined by the equation $Nzo = (veo^2)/(2heo)$.

8. Method according to one of the preceding claims,
   **characterized in that** in order to determine the said guidance segment, the said flight path. (T) having a decreasing altitude, possibly with level sections:

   a) when the method is initially implemented, an initial segment is determined as the guidance segment; and
   b) during the guidance, the segment (S2) which follows the current guidance segment (S1) in the direction of displacement ($\vec{E}$) of the aircraft (A) is determined as the guidance segment each time at least one of the following situations is satisfied:

   - the altitude of the aircraft (A) is less than the altitude (H1) of the extreme point (R1), in the direction of displacement ($\vec{E}$) of the aircraft (A), of the said current guidance segment (S1);
   - the aircraft (A) is downstream, in the direction of displacement ($\vec{E}$), of the said extreme point (R1) of the current guidance segment (S1);
   - the aircraft (A) is in follow status for the said current guidance segment (S1) and is in joining status for the following segment (S2); and
   - the aircraft (A) is in joining status both for the current guidance segment (S1) and for the following segment (S2), but can no longer return to the said current guidance segment (S1) before having passed the extreme point (R1) of the said current guidance segment (S1).

9. Method according to any one of the preceding claims, **characterized in that** the characteristic coefficients k1 and k2 are calculated from the equations:

$$k1 = w/(2.\xi) \qquad k2 = (2.\xi.w)/g$$

in which:

- g represents the acceleration due to gravity,
- $\xi$ represents a damping term, and
- w represents an angular frequency term at the resonant frequency.

10. Method according to Claim 9, **characterized in that** in order to specify the values of the terms $\xi$ and w, a plurality of guidance operations are carried out with different terms, making it possible to refine the theoretically determined parameters, and the values used for implementing the method are those for which the flight path is joined and followed optimally, with respect to predefined conditions.

**11.** Device for guiding an aircraft (A) in a vertical plane in order to join and follow a prescribed flight path (T) which is defined in the said vertical plane and is formed of successive straight segments (S1, S2), **characterized in that** it comprises,

- a first computation unit (2) which can determine the segment (S1) of the said flight path (T) with respect to which the said aircraft (A) is to be guided and comprising:

  · a first computer (3) which can determine the vertical distance he between the said aircraft (A) and the guidance segment (S1) thus determined, and
  · a second computer (5) which can determine the velocity difference ve between the actual vertical velocity (Vz) of the aircraft (A) and the vertical velocity (Vzth) which it would have if it were moving along the said guidance segment (S1), for one and the same velocity parallel to the ground; and

- a second computation unit (7) which is connected to the said first computation unit (2) and can calculate a vertical acceleration variation $\Delta$nz and transmit it to the automatic pilot of the aircraft, the said vertical acceleration variation $\Delta$nz being calculated from the relation:

$$\Delta nz = ((k1.(he-hc)) + (ve-vc)).k2$$

in which:

  · k1 and k2 represent characteristic coefficients,
  · hc and vc represent precommand terms, with nonzero values when the aircraft is in the flight path joining status, and with zero values when the aircraft is in the flight path following status, and
  · the product k1.(he-hc) is bounded between two predefined values.

**12.** Device according to Claim 11, **characterized in that** the said second computation unit (7) includes:

- an auxiliary computer (8) which can calculate the precontrol terms hc and vc;
- a first computer (9) which is connected to the said auxiliary computer (8) and can calculate the difference he-hc;
- a second computer (15) which is connected to the said first computer (9) and can calculate the product k1. (he-hc);
- a third computer (17) which can restrict the value calculated and delivered by the second computer (15);
- a fourth computer (12) which is connected to the said auxiliary computer (8) and can calculate the difference ve-vc;
- a fifth computer (19) which can calculate the sum of the results delivered by the third and fourth computers (17, 12);
- a sixth computer (22) which can multiply by k2 the result delivered by the fifth computer (19); and
- a seventh computer (24) which can restrict the result delivered by the sixth computer (22) and transmit this result as control input.

**13.** Device according to either of Claims 11 and 12, **characterized in that** it includes a means (38) which can determine whether the said aircraft (A) is in joining status for the flight path (T).


**Patentansprüche**

**1.** Methode zur Führung eines Flugzeugs (A) in einer vertikalen Ebene, um eine vorgeschriebene Flugbahn (T), die in der genannten vertikalen Ebene definiert wird und aus aufeinanderfolgenden geradlinigen Abschnitten (S1, S2) besteht, einzufangen und weiterzuverfolgen, **dadurch gekennzeichnet, dass** die folgenden Operationen wiederholt werden:

- man ermittelt den geradlinigen Abschnitt (S1) der genannten Flugbahn (T), nach dem das genannte Flugzeug (A) geführt werden soll;
- man ermittelt die vertikale Entfernung he zwischen dem genannten Flugzeug (A) und dem so bestimmten Führungsabschnitt (S1);

- man ermittelt die Differenz ve zwischen der tatsächlichen vertikalen Geschwindigkeit (Vz) von Flugzeug (A) und der vertikalen Geschwindigkeit (Vzth), die das Flugzeug hätte, wenn es sich längs des genannten Führungsabschnitts (S1) fortbewegen würde, für eine gleiche Geschwindigkeit parallel zum Boden;
- man berechnet eine Änderung der vertikalen Beschleunigung $\Delta$nz anhand der folgenden Gleichung:

$$\Delta nz = ((k1.(he\text{-}hc)) + (ve\text{-}vc)).k2$$

in der

- k1 und k2 charakteristische Koeffizienten darstellen,
- hc und vc Vorsteuerungsterme darstellen, mit Werten, die nicht gleich Null sind, wenn sich das Flugzeug in der Situation des Einfangens der Flugbahn befindet, und die Null sind, wenn das Flugzeug der Flugbahn folgt, und
- das Produkt k1. (he-hc) auf einen Wert zwischen zwei vorgegebenen Werten begrenzt wird; und

- auf Flugzeug (A) als Steuerbefehl die so errechnete und zwischen zwei vorgegebenen Werten liegende Änderung der vertikalen Beschleunigung $\Delta$nz übertragen wird.

2. Methode entsprechend Anspruch 1,
   **dadurch gekennzeichnet, dass** das Produkt k1 (he-hc) auf einen Wert zwischen zwei Werten begrenzt wird, wodurch das Flugzeug (A) mit begrenzter vertikaler Geschwindigkeit (Vz) geführt werden kann.

3. Methode entsprechend einem der Ansprüche 1 oder 2,
   **dadurch gekennzeichnet, dass** die Änderung der vertikalen Beschleunigung, die dem Flugzeug als Steuerbefehl auferlegt wird, auf einen Wert zwischen zwei Werten begrenzt wird, wodurch eine wenig abrupte Führung des Flugzeugs (A) möglich wird.

4. Methode entsprechend einem der Ansprüche 1 bis 3,
   **dadurch gekennzeichnet, dass** Flugzeug (A) in der Situation des Einfangens eines geradlinigen Abschnitts (S1) der Flugbahn (T) betrachtet wird, wenn es den genannten geradlinigen Abschnitt (S1) der Flugbahn (T) mit konstanter vertikaler Geschwindigkeit erreichen kann.

5. Methode entsprechend Anspruch 4,
   **dadurch gekennzeichnet, dass** das Flugzeug (A) in der Situation des Einfangens der Flugbahn (T) betrachtet wird, wenn die folgenden Bedingungen überprüft werden:

- die konstante vertikale Beschleunigung Nz = (ve$^2$) / (2he), mit der das Flugzeug (A) die genannte vorgeschriebene Flugbahn einfangen könnte, liegt in einem vorgegebenen Intervall;
- die Terme ve und he haben entgegengesetzte Vorzeichen; und
- die Geschwindigkeit des Flugzeugs (A) wird auf einen vorgegebenen Wert begrenzt, bei dem das Einfangen wenig abrupt erfolgen kann.

6. Methode entsprechend einem beliebigen der Ansprüche 1 bis 5, **dadurch gekennzeichnet, dass** Flugzeug (A), das in der Situation des Einfangens betrachtet wird, zur Situation der Weiterverfolgung übergeht, wenn die Geschwindigkeitsdifferenz ve unter einen vorgegebenen Schwellenwert absinkt.

7. Methode entsprechend einem beliebigen der vorangehenden Ansprüche,
   **dadurch gekennzeichnet, dass** die Vorsteuerungsterme hc und vc anhand der folgenden Gleichungen bestimmt werden:

$$\begin{cases} vc &= -\int Nzo.dt + veo \\ hc &= \int vc.dt + heo \end{cases}$$

in denen

- veo und heo jeweils die Werte von ve und he zu Beginn des Einfangens sind, und
- Nzo durch die Gleichung Nzo = (veo$^2$) / (2heo) definiert wird.

8. Methode entsprechend einem der vorangehenden Ansprüche,
   **dadurch gekennzeichnet, dass** für die Ermittlung des genannten Führungsabschnitts

   - wobei die genannte Flugbahn (T) eine eventuell stufenweise abnehmende Höhe aufweist -

     a) in der Anfangsphase der Ausführung der Methode ein Anfangsabschnitt als Führungsabschnitt festgelegt wird, und
     b) im Verlaufe der Führungsoperation als Führungsabschnitt der Abschnitt (S2) festgelegt wird, der in Flugrichtung ($\vec{E}$) von Flugzeug (A) auf den aktuellen Führungsabschnitt (S1) folgt, und zwar jedes Mal, wenn mindestens eine der folgenden Situationen überprüft wird:

     - die Höhe von Flugzeug (A) liegt unter der Höhe (H1) des höchsten Punktes (R1) - in Fortbewegungsrichtung ($\vec{E}$) von Flugzeug (A) - des genannten aktuellen Führungsabschnitts (S1);
     - das Flugzeug (A) befindet sich - gesehen in Fortbewegungsrichtung $\vec{E}$ - unterhalb des höchsten Punktes (R1) des genannten aktuellen Führungsabschnitts (S1);
     - das Flugzeug (A) befindet sich in der Situation des Fliegens auf dem genannten aktuellen Führungsabschnitt (S1) und befindet sich in der Situation des Einfangens des folgenden Führungsabschnitts (S2); und
     - das Flugzeug (A) befindet sich in der Situation, in der es gleichzeitig den aktuellen Führungsabschnitt (S1) und den darauffolgenden Abschnitt (S2) einfängt, aber nicht mehr in den genannten aktuellen Führungsabschnitt (S1) zurückgelangen kann, bevor es den höchsten Punkt (R1) des genannten aktuellen Führungsabschnitts passiert hat.

9. Methode entsprechend einem beliebigen der vorangehenden Ansprüche, **dadurch gekennzeichnet, dass** die charakteristischen Koeffizienten k1 und k2 anhand folgender Gleichungen berechnet werden:

$$k1 = w/(2.\xi) \qquad k = (2.\xi.w.)/g,$$

   in denen sind:

   - g die Fallbeschleunigung,
   - $\xi$ ein Begriff für die Dämpfung und
   - w ein Begriff für die Pulsierung mit Resonanzfrequenz.

10. Methode entsprechend Anspruch 9,
    **dadurch gekennzeichnet, dass** zur Präzisierung der Term $\xi$ und w eine Vielzahl von Führungsoperationen mit unterschiedlichen Termen ausgeführt wird, wodurch die theoretisch ermittelten Parameter verfeinert werden können, und dass zur Ausführung der Methode die Werte verwendet werden, bei denen die Operationen des Einfangens und des Weiterverfolgens der Flugbahn in Bezug auf vorgegebene Bedingungen optimal erfolgen.

11. Vorrichtung zur Führung eines Flugzeugs (A) in einer vertikalen Ebene zum Einfangen und Weiterverfolgen einer vorgeschriebenen Flugbahn (T), die in der genannten vertikalen Ebene definiert ist und aus aufeinanderfolgenden geradlinigen Abschnitten (S1, S2) besteht,
    **dadurch gekennzeichnet, dass** sie umfasst:

    - eine erste Recheneinheit (2), die den Abschnitt (S1) der genannten Flugbahn (T) ermitteln kann, nach dem das genannte Flugzeug (A) geführt werden soll und die umfasst:

      . einen ersten Rechner (3), der den vertikalen Abstand he zwischen dem genannten Flugzeug (A) und dem so bestimmten Führungsabschnitt (S1) bestimmen kann, und
      . einen zweiten Rechner (5), der die Differenz ve zwischen der tatsächlichen vertikalen Geschwindigkeit (Vz) von Flugzeug (A) und der vertikalen Geschwindigkeit (Vzth) ermitteln kann, die das Flugzeug hätte, wenn es sich längs des genannten Führungsabschnitts (S1) fortbewegen würde, für eine gleiche Geschwindigkeit parallel zum Boden; und

- eine an die erste Recheneinheit (2) angeschlossene zweite Recheneinheit (7), die eine Änderung der vertikalen Beschleunigung Δnz berechnen und sie an den Autopiloten des Flugzeugs übertragen kann, wobei die genannte Änderung der vertikalen Beschleunigung Δnz anhand folgender Gleichung berechnet wird:

$$\Delta nz = ((k1.(he-hc)) + (ve-vc)).k2,$$

wobei in dieser Gleichung:

- . k1 und k2 charakteristische Koeffizienten sind,
- . hc und vc Terme der Vorsteuerung sind für Werte, die nicht gleich Null sind, wenn sich das Flugzeug in der Situation des Einfangens der Flugbahn befindet, und für Nullwerte, wenn sich das Flugzeug in der Phase des Weiterverfolgens der Flugbahn befindet, und
- . das Produkt k1.(he-hc) auf einen Wert zwischen zwei vorgegebenen Werten begrenzt wird.

12. Vorrichtung entsprechend Anspruch 11,
**dadurch gekennzeichnet, dass** die genannte zweite Recheneinheit (7) umfasst:

- einen Hilfsrechner (8), der die Terme der Vorsteuerung hc und vc berechnen kann;
- einen ersten Rechner (9), der an den genannten Hilfsrechner (8) angeschlossen ist und die Differenz he-hc berechnen kann;
- einen zweiten Rechner (15), der an den genannten ersten Rechner (9) angeschlossen ist und das Produkt k1.(he-hc) berechnen kann;
- einen dritten Rechner (17), der den vom zweiten Rechner (15) berechneten und gelieferten Wert begrenzen kann;
- einen vierten Rechner (12), der an den genannten Hilfsrechner (8) angeschlossen ist und die Differenz ve-vc berechnen kann;
- einen fünften Rechner (19), der die Summe der vom dritten und vierten Rechner (17, 12) gelieferten Ergebnisse berechnen kann;
- einen sechsten Rechner (22), der das vom fünften Rechner (19) gelieferte Ergebnis mit k2 multiplizieren kann; und
- einen siebenten Rechner (24), der das vom sechsten Rechner (22) gelieferte Ergebnis begrenzen und dieses Ergebnis als Steuerbefehl übertragen kann.

13. Vorrichtung entsprechend einem beliebigen der Ansprüche 11 oder 12,
**dadurch gekennzeichnet, dass** es ein Mittel (38) umfasst, das ermitteln kann, ob sich das genannte Flugzeug (A) in der Situation des Einfangens der Flugbahn (T) befindet.

FIG.1

EP 0 834 787 B1

# FIG. 2

EP 0 834 787 B1

FIG.3

FIG.4

FIG.5

FIG.6

FIG.7